# EUROPEAN PATENT SPECIFICATION

(11) **EP 3 700 169 B1**
(45) Date of publication and mention of the grant of the patent: **20.07.2022**
(21) Application number: 18889521.3
(22) Date of filing: 06.12.2018
(51) Int. Cl.: H04L 67/14, G06F 13/38

(54) **ELECTRONIC DEVICE FOR COMMUNICATING WITH EXTERNAL ELECTRONIC DEVICE**
ELEKTRONISCHE VORRICHTUNG ZUR KOMMUNIKATION MIT EXTERNER ELEKTRONISCHER VORRICHTUNG
DISPOSITIF ÉLECTRONIQUE POUR COMMUNIQUER AVEC UN DISPOSITIF ÉLECTRONIQUE EXTERNE

(30) Priority: 11.12.2017 KR 20170169777
(43) Date of publication of application: 26.08.2020
(73) Proprietor: Samsung Electronics Co., Ltd., Gyeonggi-do 16677 (KR)
(72) Inventor: LEE, Wookwang, Suwon-si, Gyeonggi-do 16677 (KR); SINGHKHURANA, Guneet, Suwon-si, Gyeonggi-do 16677 (KR); LEE, Soonho, Suwon-si, Gyeonggi-do 16677 (KR); JANG, Yongseok, Suwon-si, Gyeonggi-do 16677 (KR); JUNG, Buseop, Suwon-si, Gyeonggi-do 16677 (KR); KANG, Doosuk, Suwon-si, Gyeonggi-do 16677 (KR); KIM, Minjung, Suwon-si, Gyeonggi-do 16677 (KR)
(74) Representative: HGF
(86) International application number: PCT/KR2018/015413
(87) International publication number: WO 2019/117535

(56) References cited:
- US-A1- 2004 019 732
- US-A1- 2007 180 181
- US-A1- 2016 212 226
- US-A1- 2016 246 745
- US-A1- 2017 048 373
- US-A1- 2017 168 971
- US-A1- 2017 286 356
- Anonymous: "Media Agnostic Universal Serial Bus Specification v1.0a", , 29 July 2015 (2015-07-29), XP055422735, Retrieved from the Internet: URL:http://www.usb.org/developers/docs/dev class_docs/Media_Agnostic_USB_v1.0a.zip [retrieved on 2017-11-08]

## Description

### [Technical Field]

The disclosure generally relates to an electronic device that changes a role for communication with an external electronic device.

### [Background Art]

An electronic device may be connected to an external electronic device in a wired manner or a wireless manner. For example, the electronic device may perform data communication in a wired manner by connecting to the external electronic device via a universal serial bus (USB) cable. In this instance, one electronic device may operate as a USB host, and the other electronic device may operate as a USB device. The electronic device that operates as the USB host may be steadily used as a host until the communication is terminated. As another example, an electronic device may communicate with an external electronic device in a wireless manner using a Wi-Fi serial bus (WSB) that is capable of using a USB service by connecting a radio link using a Wi-Fi interface and using a part of an existing USB protocol. In this instance, the electronic device and the external electronic device implement a media agnostic USB (MA-USB) protocol. One electronic device operates as a USB host, and the other electronic device may operate as a USB device. For example, if a PC and a smart phone are connected, the PC may operate as a USB host. For example, if communication between the electronic device and the external electronic device is connected according to the USB or WSB scheme, and the electronic device operates as a USB host, the external electronic device may operate as a USB device.

US 2017/048373 A1 discusses a slave device which provides a service to a master device via wireless communication. The document "Media Agnostic Universal Serial Bus Specification v1.0a", which is available at the web address http://www.usb.org/developers/docs/devclass_docs/Media_Agnostic_USB_v1.0a.zip, is a specification intended to provide universal serial bus connectivity over mediums other than a universal serial bus. US 2017/168971 A1 discusses devices and methods for media agnostic universal serial bus device enumeration.

### [Detailed Description of the Invention]

### [Technical Problem]

If an electronic device is connected to an external electronic device in a wireless or wired manner, and the electronic device operates as a host, the electronic device may identify and use a file stored in the external electronic device. However, if the electronic device operates as a device, the electronic device may be incapable of identifying or using a file stored in the external electronic device, and thus a service provided by the electronic device may be restricted.

According to various embodiments, there is provided an electronic device that is capable of dynamically changing the role of the electronic device, which is designated to be a host or a device, when the electronic device and an external electronic device are connected via WSB communication.

### [Technical Solution]

According to various embodiments, an electronic device may include a wireless communication circuit, a processor electrically connected to the communication circuit, and a memory electrically connected to the processor, wherein the memory stores instructions configured to cause the processor to, when executed: establish communication with an external electronic device using the communication circuit by operating as a media agnostic universal serial bus (MA USB) device to perform device functions defined in MA USB specifications; determine to change the electronic device to be a MA USB host, based on a type of an application which is executed in the electronic device; and communicate with the external electronic device by operating as the MA USB host to suspend providing a service as the MA USB device and to perform host functions defined in the MA USB specifications.

### [Advantageous Effects]

According to various embodiments, there is provided a dual role which can dynamically change the role of an electronic device, which is designated to be a host or a device, when the electronic device and an external electronic device are connected via WSB communication, so that the electronic device can perform a host function and a device function when connecting to the external electronic device.

### [Brief Description of Drawings]

FIG. 1 is a block diagram of an electronic device in a network environment according to various embodiments;
FIG. 2 is a diagram illustrating an example in which an electronic device and an external electronic device are connected via WSB communication according to various embodiments;
FIG. 3 is a block diagram of an electronic device that supports WSB communication according to various embodiments;
FIG. 4 is a block diagram of a MA USB host of an electronic device according to various embodiments;
FIG. 5 is a block diagram of a MA USB device of an electronic device according to various embodiments;
FIG. 6 is a diagram illustrating an example of switching a MA USB mode between an electronic device and an external electronic device according to various embodiments;
FIG. 7 is a diagram illustrating an example of switching a MA USB mode between an electronic device and an external electronic device according to various embodiments;
FIG. 8 is a flowchart illustrating a method of performing WSB communication with an external electronic device by an electronic device according to various embodiments;
FIG. 9 is a flowchart illustrating a method of performing WSB communication with an external electronic device by an electronic device according to various embodiments;
FIG. 10 is a flowchart illustrating a method of performing WSB communication with an external electronic device by an electronic device according to various embodiments;
FIG. 11 is a flowchart illustrating a method of performing WSB communication with an external electronic device by an electronic device according to various embodiments;
FIG. 12 is a flowchart illustrating a method of performing WSB communication with an external electronic device by an electronic device according to various embodiments;
FIG. 13 is a diagram illustrating an example of a settings screen for changing a MA USB mode of an electronic device according to various embodiments;
FIG. 14 is a diagram illustrating an example of changing the MA USB modes of an electronic device and an external electronic device according to various embodiments;
FIG. 15 is a diagram illustrating an example of changing the MA USB modes of an electronic device and an external electronic device according to various embodiments; and
FIG. 16 is a diagram illustrating an example of a WSB connection setup between an electronic device and an external electronic device according to various embodiments.

### [Mode for Carrying out the Invention]

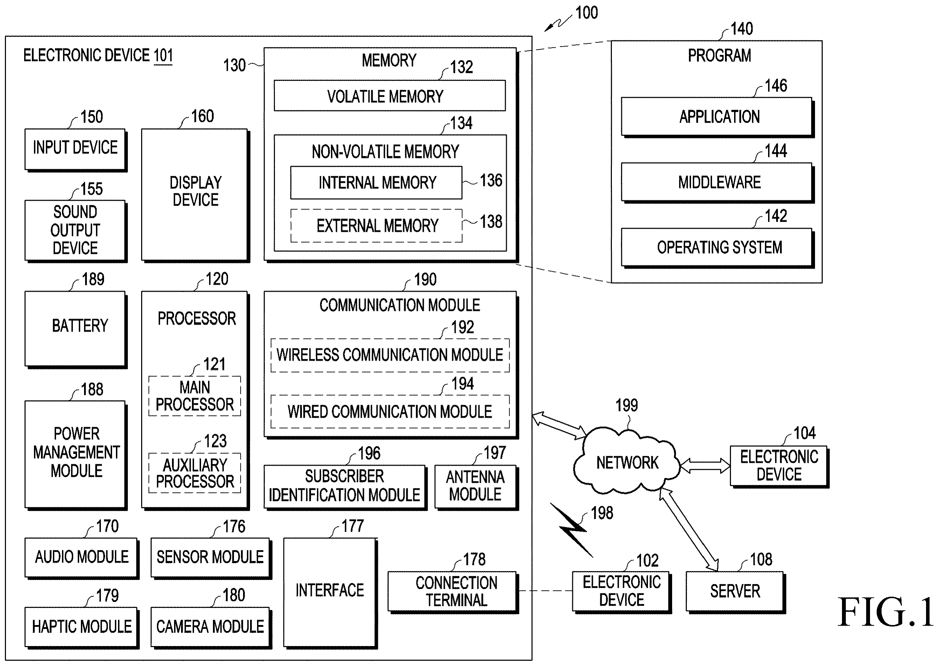

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include at least one antenna, and thereby at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

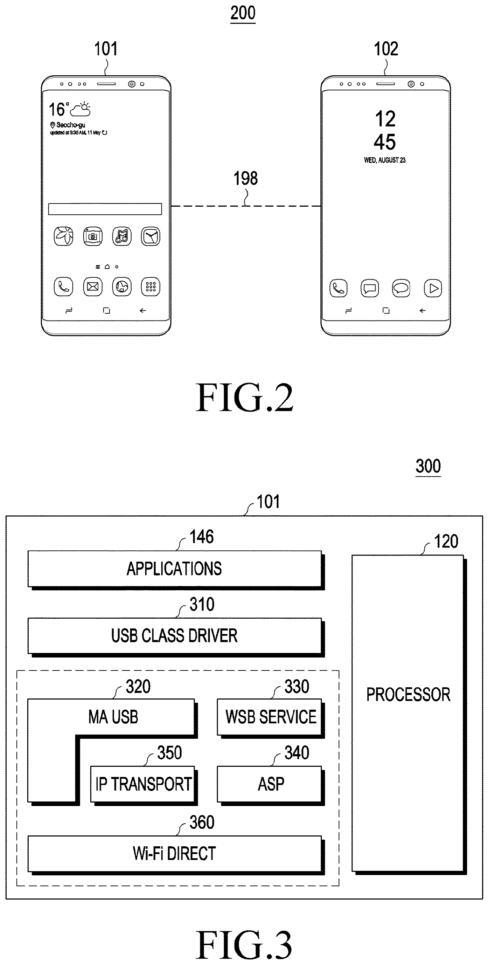

FIG. 2 is a diagram 200 illustrating an example in which an electronic device and an external electronic device are connected via WSB communication according to various embodiments.

At least one of the electronic device 101 or the electronic device 102 may include at least one component of the electronic device 101 of FIG. 1, and may perform at least one function or operation thereof.

Referring to FIG. 2, the electronic device 101 (e.g., the electronic device 101 of FIG. 1) according to various embodiments and the external electronic device 102 (e.g., the electronic device 101 or the electronic device 102 of FIG. 1) may perform short-range wireless communication 198 (e.g., the first network 198 of FIG. 1). The electronic device 101 and the external electronic device 102 may perform Wi-Fi serial bus (WSB) communication based on the short-range wireless communication 198. The WSB communication may connect communication between devices (e.g., the electronic device 101 and the external electronic device 102) via a Wi-Fi interface, and may use a USB service using a USB technology. To this end, a device that provides a WSB communication connection may implement a media agnostic USB (MA USB) protocol, and may designate a function needed for a MA USB operation via Wi-Fi. The MA USB protocol may be a protocol that uses a USB bus environment configured as a wired environment designated by a USB interface, and configures a tele-virtual USB environment that uses a wireless environment, an IP link, or the like.

According to various embodiments, the electronic device 101 and the external electronic device 102 may support a WSB dual-role capable of performing a WSB host role and a WSB device role in WSB communication. The electronic device 101 and the external electronic device 102 may change a role from a WSB host role to a WSB device role, or from the WSB device role to the WSB host role in the WSB communication. The WSB host role may perform a MA USB host function defined in the media agnostic universal serial bus (MA USB) specifications, and may enable a Wi-Fi connection to at least one of a WSB peripheral device or a WSB hub. The WSB device role may perform a MA USB device function defined in the MA USB specifications, and may correspond to the role of a device having a function of a WSB hub or a WSB peripheral device. The WSB peripheral device may perform a MA USB device function, and may enable a Wi-Fi connection to the WSB host.

According to various embodiments, the electronic device 101 or the external electronic device 102 may connect communication using WSB communication. If the electronic device 101 and the external electronic device 102 are connected via WSB communication, one of the electronic device 101 and the external electronic device 102 may be designated as a WSB host role, and the other may be designated as a WSB device role. In a WSB communication connected state, when needed, the electronic device 101 or the external electronic device 102 may identify a USB role, and the electronic device 101 or the external electronic device 102 may change the role to the WSB device role if the identified role is the WSB host role, or the electronic device 101 or the external electronic device 102 may change the role to the WSB host role if the identified role is the WSB device role.

FIG. 3 is a block diagram 300 of an electronic device that supports WSB communication according to various embodiments.

Referring to FIG. 3, the electronic device 101 may support a WSB communication scheme using a wireless connection via Wi-Fi communication (e.g., Wi-Fi Direct). The electronic device 101 may include the processor 120, and may include the applications 146 and a USB class driver 310, which are programs executed by the processor 120. Also, the electronic device 101 may include a MA USB block 320, a WSB service block 330, an application service platform (ASP) block 340, an Internet protocol transport (IP transport) block 350, and a Wi-Fi Direct block 360, which support the WSB communication scheme, as programs executed by the processor 120. The electronic device 101 may provide WSB communication with the external electronic device 102 via the Wi-Fi Direct block 360.

According to various embodiments, the USB class driver 310 may be a device driver configured to operate various USB devices that share the USB protocol.

According to various embodiments, the media agnostic USB (MA USB) block 320 may perform a MA USB enumeration process and USB data transferring, using the MA USB protocol, after connection of an ASP session.

According to various embodiments, the WSB service block 330 may operate in a higher layer of the ASP block 340, and may be configured to interact with the ASP block in order to perform a service discovery and a connection setup associated with a WSB service. The WSB service block 330 and the ASP block 340 may exchange primitives and events for performing a service discovery and connection setup, via a communication path. For example, the WSB service block 330 may designate a transport mode of the MA USB protocol during each WSB session of the WSB service.

According to various embodiments, the IP transport block 350 may be connected to the MA USB block 320 based on an IP.

According to various embodiments, the ASP block 340 may implement common functions used by applications 146 and services that operate via the Wi-Fi Direct block 360 or another wireless connection.

According to various embodiments, the Wi-Fi Direct block 360 may connect communication between electronic devices (e.g., the electronic device 101 and the external electronic device 102) that support a WSB communication connection via a wireless network (e.g., the short-range wireless communication 189). For example, the Wi-Fi Direct block 360 may generate a P2P Group (e.g., Wi-Fi Direct Group), and may establish a wireless connection between a group owner (GO) terminal and a group client (GC) terminal in the generated P2P Group. In a P2P connection, a GO and a GC are connected in a data link layer, that is, a MAC layer, in the Wi-Fi P2P group. As another example, Wi-Fi and a tunneled direct link setup (TDLS) configured to establish a direct link between devices supporting the WSB service may be further included.

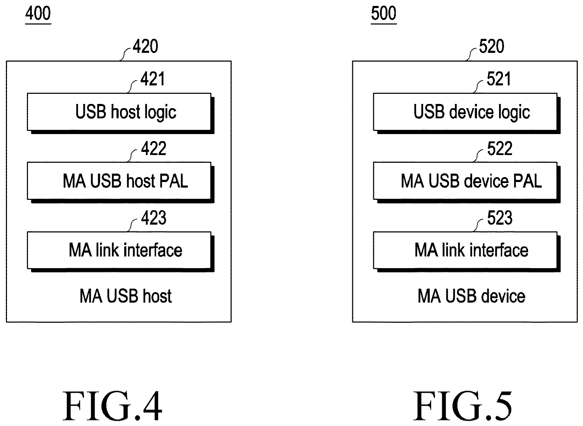

FIG. 4 is a block diagram 400 of a MA USB host block of an electronic device according to various embodiments.

Referring to FIG. 4, a MA USB host block 420 may interface with the USB class driver 310, so as to perform a USB host function defined in the existing USB specifications, and may include a USB host logic 421, a MA USB host protocol adaptation layer (PAL) 422, and a MA link interface 423. The MA USB host block 420 may manage a MA USB service set and a communication session in association with a MA USB device, may manage configuration and exchanging performance with the MA USB device, may manage adding and removing of a MA USB device, and may manage USB transmission performed to each USB device, and a flow control. Also, the MA USB host block 420 may perform USB transmission according to a MA link frame type and transmission role, via the MA link interface 423. The MA USB host block 420 may provide an abstraction function which is the same as that of a USB bus provided by a USB driver of an OS, and may control the MA link interface 423 so that an operation may be performed in the MA USB protocol layer without changing an existing software driver for various USB classes (e.g., large-capacity storage devices, human interface devices (HID), audio devices, or the like).

FIG. 5 is a block diagram 500 of a MA USB device block of an electronic device according to various embodiments.

Referring to FIG. 5, a MA USB device block 520 may correspond to the MA USB host block 420 which is capable of being remotely connected to one or more peripheral devices, and may include a USB device logic 521, a MA USB device protocol adaptation layer (PAL) 522, and a MA link interface 523. The MA USB device block 520 may manage a MA USB service set and a communication session in association with the MA USB host block 420, may manage USB device reset and address allocation, and may manage adding and removing of a MA USB device. Also, the MA USB device block 520 may perform USB transmission according to a MA link frame type and transmission role, via the MA link interface 523.

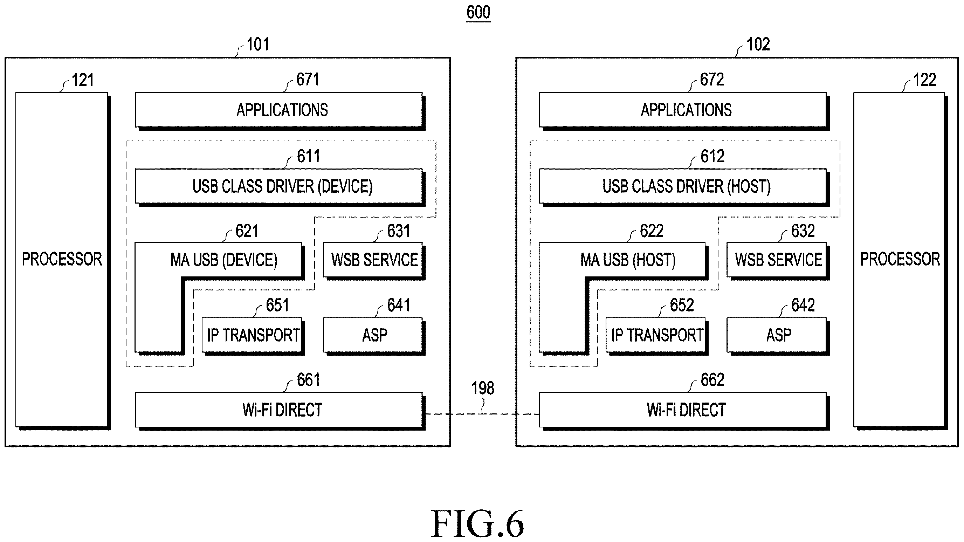

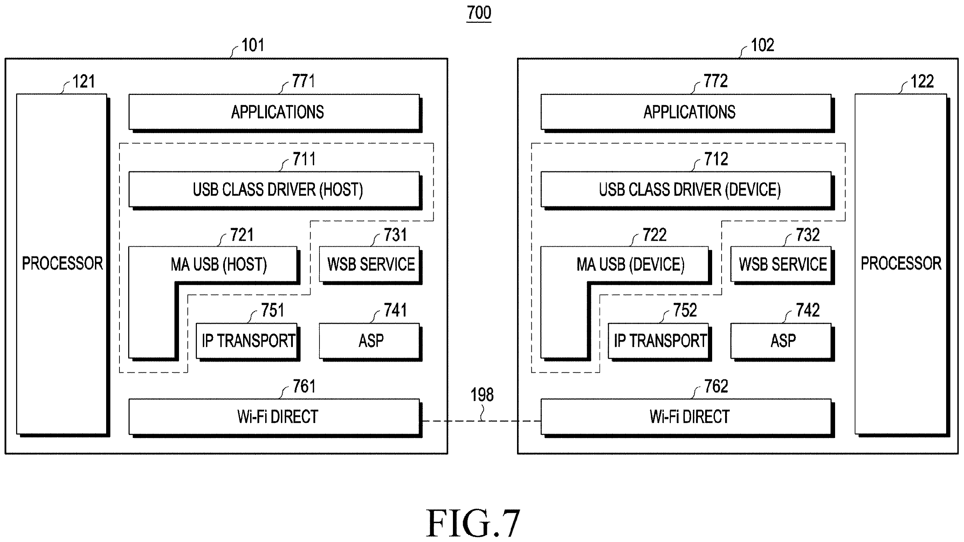

FIGS. 6 and 7 are diagrams 600 and 700 illustrating examples of switching a MA USB mode between an electronic device and an external electronic device according to various embodiments.

Referring to FIG. 6, the electronic device 101 operates as a MA USB device, and the external electronic device 102 operates as a MA USB host. Referring to FIG. 7, the electronic device 101 operates as a MA USB host, and the external electronic device 102 operates as a MA USB device.

Referring to FIGS. 6 and 7, the electronic device 101 and the external electronic device 102 may include at least one component of the electronic device 101 of FIG. 1, and may perform at least one function or operation thereof.

In FIG. 6, the electronic device 101 may include the processor 121 (e.g., the processor 120), and may include applications 671 (e.g., the applications 146) as programs executed by the processor 121. Also, the electronic device 101 may include a USB class driver (device) 611 that operates as a device role, a MA USB device block 621 configured to perform MA USB device functions, a WSB service block 631, an application service platform (ASP) block 641, an Internet protocol transport (IP transport) block 651, and a Wi-Fi Direct block 661, as programs executed by the processor 121. Also, the electronic device 102 may include the processor 122 (e.g., the processor 120), and may include the applications 672 (e.g., the applications 146) as programs executed by the processor 122. Also, the external electronic device 102 may include a USB class driver (host) 612 that operates as a host role, a MA USB host block 622 configured to perform MA USB host functions, a WSB service block 632, an application service platform (ASP) block 642, an Internet protocol transport (IP transport) block 652, and a Wi-Fi Direct block 662, as programs executed by the processor 122.

In FIG. 7, the electronic device 101 may include the processor 121 (e.g., the processor 120), and may include applications 771 (e.g., the applications 146) as programs executed by the processor 121. Also, the electronic device 101 may include a USB class driver (host) 711 that operates as a host role, a MA USB host block 721 configured to perform MA USB host functions, a WSB service block 731, an application service platform (ASP) block 741, an Internet protocol transport (IP transport) block 751, and a Wi-Fi Direct block 761, as programs executed by the processor 121. Also, the external electronic device 102 may include the processor 122 (e.g., the processor 120), and may include applications 772 (e.g., the applications 146) as programs executed by the processor 122. Also, the external electronic device 102 may include a USB class driver 712 that operates as a device role, a MA USB device block 722 configured to perform MA USB device functions, a WSB service block 732, an application service platform (ASP) block 742, an Internet protocol transport (IP transport) block 752, and a Wi-Fi Direct block 762, as programs executed by the processor 122.

As illustrated in FIG. 6, the electronic device 101 and the external electronic device 102 may be connected in a wireless manner via WSB communication. The electronic device 101 and the external electronic device 102 may be connected in a wireless manner via the Wi-Fi Direct block 661 of the electronic device 101 and the Wi-Fi Direct block 662 of the external electronic device 102. The electronic device 101 may operate as a MA USB device role, and the external electronic device 102 may operate as a MA USB host role.

According to various embodiments, the electronic device 101 may include the MA USB device block 621 configured to perform device functions. The USB class driver 611 that interfaces with the MA USB device block 621 may operate as a device role. Also, the external electronic device 102 may include the MA USB host block 622 configured to perform host functions. The USB class driver 612 that interfaces with the MA USB host block 622 may operate as a host role.

According to various embodiments, the processor 121 may control the overall operation of the electronic device 101. The processor 121 may connect WSB communication with the external electronic device 102 using the Wi-Fi Direct block 661. The processor 121 may activate the MA USB device block 621 configured to enable the electronic device 101 to perform device functions, and may establish communication with the external electronic device 102 using the Wi-Fi Direct block 661.

According to various embodiments, using the WSB service block 631 configured to connect WSB communication with the external electronic device 102, the processor 121 may perform a WSB discovery in order to connect WSB communication via the Wi-Fi Direct block 661. The WSB service block 631 may broadcast information including at least one of a service name, an advertisement ID, service information for the WSB communication connection, may receive a probe request from the external electronic device 102 in response thereto, and may transmit a probe response in response thereto. The service information in the information broadcasted may include USB functions and a transport mode of the MA USB protocol. The WSB discovery operation is based on the application service platform (ASP) of the Wi-Fi Direct service (WFDS), which is the WFA standard. In the WSB discovery operation, the service name, the advertisement ID, the service information, and the like may be exchanged with the external electronic device 102. The advertisement ID may refer to the unique ID value of each service. Also, the service name may indicate the role of a device that supports WSB connection. For example, the service name may have the structure as shown in Table 1 below.

**[Table 1]**

| Service name |
|---|
| Org.wi-fi.wsb.[architectural element].[baseclass].[subclass].[protocol] |

"Org.wi-fi.wsb" is a prefix indicating WSB defined in Wi-Fi alliance, and "architectural element" indicates the type of electronic device, that is, a host role or a device role. The subsequent fields may comply with USB descriptor information defined in the USB standard. For example, in the case of a USB mouse device, "baseclass", "subclass", and "protocol" defined in the USB standard are 03.00.03, and the service name used in the WSB standard may be org.wi-fi.wsb.device.03.00.02. Also, the service information may include more detailed information of WSB. The WSB session setup based on the ASP may be performed based on the above-mentioned information associated with the WSB discovery operation. In the WSB discovery operation, a terminal may search for a terminal having a counterpart WSB USB role. For example, from the perspective of a WSB host, if a seek service is performed, the WSB host transmits a probe request, and discovers a terminal that is advertised as a WSB device based on a probe response so as to attempt connection thereto, and vice versa.

According to various embodiments, the electronic device 101 or the external electronic device 102 may exchange service name information set according to a preferred role or an automatically set role in the WSB discovery operation, and may perform WSB connection according to each role, based on the exchanged service name information. As another example, the electronic device 101 or the external electronic device 102 may exchange capability information including information indicating whether changing of a role is supported in the WSB discovery operation.

According to various embodiments, the processor 121 may set up a Wi-Fi Direct connection (e.g., Wi-Fi P2P Group) with the external electronic device, based on the WSB discovery operation. A Wi-Fi Direct connection may be newly generated, or an existing Wi-Fi Direct connection may be used.

According to various embodiments, the processor 121 may use the WSB service block 631 so as to request the ASP block 641 to initiate requesting for a WSB session. The WSB service block 631 may identify the external electronic device 102 to be connected via a WSB, may set a P2P connection scheme, and may call a session connection method including parameters for requesting a WSB session according to the set P2P scheme. The WSB service block 631 may select a transport mode for the MA USB protocol in the requested WSB session. For example, the WSB service block 631 may select a transport mode for the MA USB protocol in the requested WSB session, based on supportable transport modes (e.g., IP or MAC) and WSB host's preferences for a transport mode, which are identified from service information obtained from the external electronic device 102 to be connected via a WSB.

According to various embodiments, after the WSB session is set up, the electronic device 101 or the external electronic device 102 may exchange MA USB packets for the WSB session via the P2P wireless connection using corresponding WSB service blocks 631 and 632, and the MA USB device block 621 may be activated for a USB device enumeration process. The MA USB device block 621 may transfer USB data and perform USB device operations according to a transport mode selected among the supportable transport modes for the WSB session.

According to various embodiments, after the WSB session is set up between the electronic device 101 and the external electronic device 102, a WSB host device may trigger the USB device enumeration process using the MA USB host block 622. The WSB host device may be a device that is determined to be a WSB host, based on information exchanged in the WSB discovery operation.

According to various embodiments, the electronic device 101 or the external electronic device 102 may identify the USB role of a partner device with which the WSB communication is connected. For example, the electronic device 101 or the external electronic device 102 may use role information (e.g., service name) obtained in the WSB discovery operation that is executed first among the operations performed for WSB connection. Alternatively, the electronic device 101 or the external electronic device 102 may identify the USB role of itself, or may request a partner device to identify the USB role. For example, the electronic device 101 or the external electronic device 102 may identify class capability related to the function of a supportable role of a partner device.

According to various embodiments, the electronic device 101 or the external electronic device 102 may not perform an operation of changing the role of the corresponding electronic device, if it is determined that the role or class capability of a partner device is incapable of performing a function that the corresponding electronic device requires. In this instance, the electronic device 101 or the external electronic device 102 may display a message (e.g., UX) indicating that a role change function is not allowed, on a display (e.g., the display device 160). For example, if an electronic device that operates as a WSB device attempts file transmission via a file sharing application, the electronic device may determine whether to change a role from the WSB device to a WSB host device, and may identify whether a partner device is capable of performing a WSB device role for file sharing. For example, the electronic device may identify whether the partner device includes a USB larger-capacity storage device class. If the partner device does not include the corresponding function class, the electronic device may display, on the display 160, a message indicating that file transmission to a user is not allowed.

According to various embodiments, the processor 121 may determine to change the electronic device 101 to be a MA USB host, based on the state of the electronic device 101 or a request from the external electronic device 102. For example, the processor 121 may determine whether to change a role to a host role, depending on the type of application 671 which is running in the electronic device 101. For example, if an application that requires a host function is running or a role switching function is activated in the electronic device 101, the processor 121 may determine that the electronic device 101 needs to change a role to a host role. Alternatively, the processor 121 may determine whether to change a role, based on a request from a user. For example, if the electronic device 101 is required to use a designated function (e.g., file sharing or the like), the processor 121 may determine that the electronic device 101 needs to change the role to a host role. For example, while the electronic device 101 operates as a device role, if an application 671 for file sharing is running and file transmission is attempted via the running file sharing application 671, the processor 121 may determine that the electronic device 101 needs to change the role from the device role to a host role.

According to various embodiments, if it is determined that the electronic device 101 needs to change the role from a device role to a host role, the processor 121 may deactivate the MA USB device block 621 so as to suspend providing a service as a MA USB device, may activate the MA USB host block 721 configured to perform host functions so that the electronic device 101 functions in a host role, and may communicate with the external electronic device 102.

According to various embodiments, the processor 121 may trigger a MA USB enumeration process for the external electronic device 102, using the MA USB host block 622, so that the electronic device 101 operates the MA USB host role and communicates with the external electronic device 102. If it is determined that the electronic device 101 needs to change the role to the MA USB host role, the processor 121 may transfer information indicating that changing of the role of the electronic device 101 to the MA USB host role is determined, to the external electronic device 102. The processor 121 may perform control so that the USB class device 711 operates as a host role, when the role of electronic device 101 is changed to a MA USB host role.

According to various embodiments, the role of the external electronic device 102 may be changed from a MA USB host role to a MA USB device role, at the same time when the role of the electronic device 101 is changed from a MA USB device role to a MA USB host role. Also, the USB class driver 712 of the external electronic device 102 may operate as a device role.

According to various embodiments, if the electronic device 101 determines to change the role from a device role to a host role, the processor 121 may change the MA USB device block 621 to the MA USB host block 721 in the state of maintaining the existing WSB session connection, using the WSB service block 631. For example, the WSB service block 631 may deactivate the MA USB device block 621, may activate the MA USB host block 721, and may remove an existing USB class protocol stack. The activated MA USB host block 721 may perform an enumeration process for a new USB connection, and may load a new USB class protocol stack. The WSB service block 631 may transfer a connection event including information associated with an existing connected WSB session (e.g., an IP address, a MAC address, a session identifier, and the like), to the MA USB host block 721. As another example, the WSB service block 631 may successively transmit a service teardown event and a connection event to the MA USB device block 621, so as to remove an existing USB class protocol stack, and may activate the MA USB host block 721, so as to load a new USB class protocol stack. The WSB service block 631 may transfer a connection event including information associated with an existing connected WSB session (e.g., an IP address, a MAC address, a session identifier, and the like), to the MA USB host block 721. The connection event may include a service name corresponding to a new USB role and USB class.

According to various embodiments, if the electronic device 101 determines to change the role from a device role to a host role, the processor 121 may terminate a WSB session connection (e.g., using CloseSession method or REMOVE_SESSION), and may set up a new WSB session. The processor 121 may not perform Dissociation after ReleasePort, when terminating a WSB session connection. Also, the processor 121 may not perform a connection setup (e.g., a Wi-Fi Direct connection), when setting up a new WSB session. The processor 121 may store information such as an advertisement ID, a MAC address, an IP address, and the like which are used for the previous WSB session connection. If the WSB session connection is terminated, the processor 121 may set up a WSB session using the information stored in advance. For example, the processor 121 may omit an operation such as SessionStatus Requested, and may perform a SessionStatus Open method so as to rapidly set up a session with a partner device. The processor 121 may set up a WSB session that supports a role different from a previous role, using a Wi-Fi direct group (e.g., a P2P group) of which connection is set up, so as to support changing a role. As another example, when setting up a WSB session, the processor 121 may have an advertisement ID and a session ID, which are different from those of the previous session setup. The newly set WSB session may perform a different USB role from that of the previous WSB session, and the respective roles and sessions may correspond to different MA USB modes and drives.

According to various embodiments, if changing of the role of the electronic device 101 from a device role to a host role is determined, and at least one electronic device among a group owner (GO) and a plurality of group clients (GCs) included in the Wi-Fi Direct group performs a session teardown for changing a role, the processor 121 may discover and connect to an existing Wi-Fi Direct group, using Wi-Fi Direct group information stored in advance (e.g., session information, performance information, or the like). If the connection setup is complete, the processor 121 may perform a WSB session setup and a MA USB enumeration process, so that WSB communication which has a role different from the previous USB role is completely connected.

According to various embodiments, if changing the role of the electronic device 101 from a device role to a host role is determined, the processor 121 may terminate a WSB session connection (e.g., using a CloseSession method), and may perform a connection setup again. The processor may terminate the existing Wi-Fi Direct group connection, and may set up a new Wi-Fi Direct group connection.

According to various embodiments, if changing the role of the electronic device 101 from a device role to a host role is determined, the processor 121 may terminate a WSB session connection (e.g., using a CloseSession method), and may perform a disassociation method in the state in which the WSB session is terminated, so as to terminate the previous Wi-Fi Direct group connection. The processor 121 may perform a WSB discovery and a connection setup, so as to generate a new Wi-Fi Direct group, and may connect WSB communication having a different role from the previous USB role. The new Wi-Fi Direct group may be promptly performed using information related to the previous connection. For example, the processor 121 may generate a Wi-Fi Direct group using a band different from that of the currently connected Wi-Fi Direct connection, based on a real simultaneous dual band (RSDB) function, and may connect WSB communication. For example, if WSB session teardown is performed, the processor 121 may terminate a WSB session using a closeSession method, and may perform a disassociation method so as to terminate the previous Wi-Fi Direct group connection. The processor 121 may perform a WSB discovery, a connection setup, a WSB session setup, and a MA USB enumeration process using a different band, based on the previous Wi-Fi direct group information, before or after performing the disassociation method, and may complete connection of WSB communication having a different role from the previous USB role.

An electronic device (e.g., the electronic device 101 or 102) according to various embodiments may include a communication circuit (e.g., the communication module 190, the wireless communication module 192, or the Wi-Fi Direct 360, 661, 662, 761, and 762) configured to provide wireless communication, a processor (e.g., the processor 120, 121, or 122) electrically connected to the communication circuit, and the memory 130 electrically connected to the processor 120, wherein the memory 130 stores instructions configured to cause the processor 120 to, when executed: establish communication with an external electronic device (e.g., the electronic device 101 or 102) using the communication circuit by operating as a media agnostic universal serial bus (MA USB) host configured to enable the electronic device to perform host functions defined in MA USB specifications; determine to change the electronic device to be a MA USB device, based on at least one of a state of the electronic device or a request from the external electronic device; and communicate with the external electronic device by operating as the MA USB device configured to enable the electronic device to: suspend providing a service as the MA USB host and perform device functions defined in the MA USB specifications.

In the electronic device 101 according to various embodiments, the instructions cause the processor to enable the electronic device to perform the host functions using a USB class host driver (e.g., the USB class host driver 612 and 711) and a MA USB host block (e.g., the MA USB host block 420, 622, and 712) that interfaces with the USB class host driver, wherein the MA USB host block (e.g., the MA USB host block 420) may include a USB host logic 421, a MA USB host protocol adaptation layer (PAL) 422, and a MA link interface 323.

In the electronic device 101 according to various embodiments, the instructions cause the processor to enable the electronic device to perform the device functions using a USB class device driver (e.g., the USB class device driver 611 and 712) and a MA USB device block (e.g., the MA USB device block 520, 621, and 722) that interfaces with the USB class device driver, wherein the MA USB device block (e.g., the MA USB device block 520) may include a USB device logic 521, a MA USB device protocol adaptation layer (PAL) 522, and a MA link interface 523.

In the electronic device 101 according to various embodiments, the instructions cause the processor to perform a MA USB enumeration process triggered by the external electronic device to enable the electronic device communicates with the external electronic device by operating as the MA USB device.

In the electronic device 101 according to various embodiments, the instructions may be configured to cause the processor to determine whether the external electronic device is changeable to be the MA USB host, and to determine whether to change the electronic device to be the MA USB device based on the determination.

In the electronic device 101 according to various embodiments, the instructions may be configured to cause the processor to transfer, to the external electronic device, information indicating that changing of the electronic device to be the MA USB device is determined, in response to changing of the electronic device to be the MA USB device being determined.

In the electronic device 101 according to various embodiments, the instructions may be configured to cause the processor to perform operations based on a Wi-Fi serial bus (WSB) service, which is configured to enable the electronic device to connect WSB communication before the electronic device establishes communication with the external electronic device by operating as the MA USB host, the operations including: a WSB discovery operation for connecting the WSB communication via the communication circuit; an operation of setting up a Wi-Fi Direct connection with the external electronic device, based on the WSB discovery operation; and an operation of setting up a WSB session with the external electronic device via a Wi-Fi Direct connection with the external electronic device.

In the electronic device 101 according to various embodiments, the instructions may be configured to cause the processor to exchange information including at least one of a service name, an advertisement ID, service information for the WSB communication connection, or capability information of a dual-role function of the electronic device or the external electronic device, via the WSB discovery operation.

In the electronic device 101 according to various embodiments, the instructions may be configured to cause the processor to exchange information including at least one of a peer to peer (P2P) address, an IP address, a MAC address, or a session identifier, via the operation of setting up the WSB session with the external electronic device.

In the electronic device 101 according to various embodiments, the instructions may be configured to cause the processor to deactivate the MA USB host and to activate the MA USB device using the WSB service, if changing of the electronic device to be the MA USB device is determined.

In the electronic device 101 according to various embodiments, the instructions may be configured to cause the processor to perform at least one of the WSB discovery operation, the operation of setting up the Wi-Fi Direct connection, or the operation of setting up the WSB session, after changing of the electronic device to be the MA USB device is determined.

In the electronic device 101 according to various embodiments, the instructions may be configured to cause the processor to: maintain the Wi-Fi Direct connection with the external electronic device, terminate the WSB session, and set up a new WSB session associated with the MA USB device, in response to changing of the electronic device to be the MA USB device being determined.

In the electronic device 101 according to various embodiments, the instructions may be configured to cause the processor to terminate the Wi-Fi Direct connection with the external electronic device, to set up a new Wi-Fi Direct connection and a new WSB session associated with the MA USB device, in response to changing of the electronic device to be the MA USB device being determined.

In the electronic device 101 according to various embodiments, the instructions may be configured to cause the processor to set up the new Wi-Fi Direct connection associated with the MA USB device, using a band different from that of the terminated Wi-Fi Direct connection.

An electronic device (e.g., the electronic device 101 or 102) according to various embodiments may include a communication circuit (e.g., the communication module 190, the wireless communication module 192, or the Wi-Fi Direct 360) configured to provide wireless communication, a processor (e.g., the processor 120, 121, or 122) electrically connected to the communication circuit, and the memory 130 electrically connected to the processor, wherein the memory stores instructions configured to cause the processor to, when executed: establish communication with an external electronic device using the communication circuit by operating as a media agnostic universal serial bus (MA USB) device configured to enable the electronic device to perform device functions defined in MA USB specifications; determine to change the electronic device to be a MA USB host, based on at least one of a state of the electronic device or a request from the external electronic device; and communicate with the external electronic device by operating as the MA USB host configured to enable the electronic device to: suspend providing a service as the MA USB device and perform host functions defined in the MA USB specifications enable the electronic device, which is a media agnostic universal serial bus (MA USB) device configured to perform device functions defined in MA USB specifications, to establish communication with an external electronic device using the communication circuit; determine to change the electronic device to be a MA USB host, based on at least one of a state of the electronic device or a request from the external electronic device; and enable the electronic device to suspend providing a service as the MA USB device, and to communicate with the external electronic device by operating as a MA USB host configured to perform host functions defined in the MA USB specifications.

In the electronic device 102 according to various embodiments, the instructions may be configured to cause the processor to trigger a MA USB enumeration process for the external electronic device to enable the electronic device communicates with the external electronic device by operating as the MA USB host.

In the electronic device 102 according to various embodiments, the instructions may be configured to cause the processor to transfer, to the external electronic device, information indicating that changing of the electronic device to be the MA USB host is determined, in response to changing of the electronic device to be the MA USB host being determined.

In the electronic device 102 according to various embodiments, the instructions may be configured to cause the processor to deactivate the MA USB device and to activate the MA USB host using the WSB service configured to enable the electronic device to connect Wi-Fi serial bus (WSB) communication, in response to changing of the electronic device to be the MA USB host being determined.

In the electronic device 102 according to various embodiments, the instructions may be configured to cause the processor to perform at least one of operations using the WSB service, after changing of the electronic device to be the MA USB host is determined, the operations including: a WSB discovery operation for connecting the WSB communication via the communication circuit; an operation of setting up a Wi-Fi Direct connection with the external electronic device, based on the WSB discovery operation; or an operation of setting up a WSB session with the external electronic device via a Wi-Fi Direct connection with the external electronic device.

A non-transitory computer-readable storage medium stores instructions according to various embodiments, wherein the instructions are configured to cause the at least one circuit to, when executed by at least one circuit, perform at least one operation, the at least one operation including: establishing communication with an external electronic device using the communication circuit by operating as a media agnostic universal serial bus (MA USB) device configured to enable the electronic device to perform host functions defined in MA USB specifications; an operation of determining to change the electronic device to be a MA USB device, based on at least one of a state of the electronic device or a request from the external electronic device; and an operation of communicating with the external electronic device by operating as the MA USB device configured to enable the electronic device to: suspend providing a service as the MA USB host and perform device functions defined in the MA USB specifications.

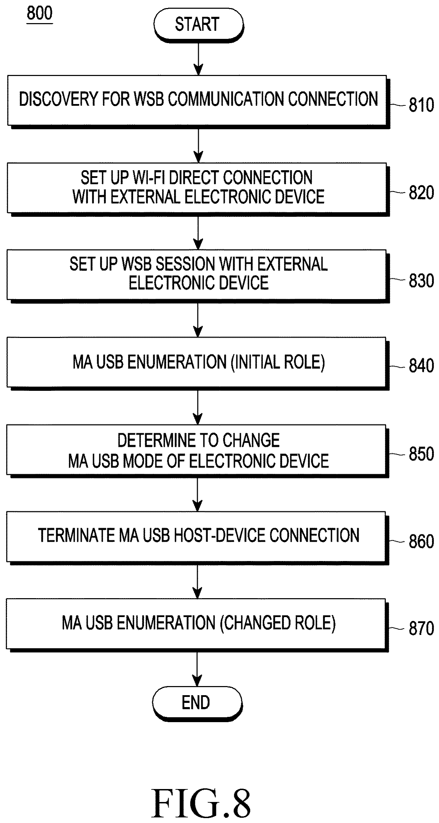

FIG. 8 is a flowchart 800 illustrating a method of performing WSB communication with an external electronic device by an electronic device according to various embodiments.

According to various embodiments, operations 810 to 870 may be performed by an electronic device (e.g., the electronic device 101 or 102) or a processor (e.g., the processor 120, 121, or 122) in FIG. 6 or 7. The electronic device 101 may store, in the memory 130, instructions that enable operations 810 to 870 to be implemented.

In operation 810, an electronic device (e.g., the electronic device 101 or 102) may perform a WSB discovery for a WSB communication connection with an external electronic device (e.g., the electronic device 101 or 102). For example, the electronic device 101 may perform a WSB discovery for a WSB communication connection via the Wi-Fi Direct 661, using the WSB service block 631 configured to connect WSB communication with the external electronic device 102. The WSB service block 631 may broadcast information including at least one of a service name, an advertisement ID, and service information for the WSB communication connection, may receive a probe request from the external electronic device 102 in response thereto, and may transmit a probe response in response thereto. The service information in the information broadcasted may include USB functions and a transmission mode of the MA USB protocol. The WSB discovery operation is based on the application service platform (ASP) of the Wi-Fi Direct service (WFDS), which is the WFA standard. In the WSB discovery operation, the service name, the advertisement ID, the service information, and the like may be exchanged with the external electronic device 102. The advertisement ID may refer to the unique ID value of each service. Also, the service name may indicate the role of a device that supports WSB connection. Also, the service information may include more detailed information of WSB. The WSB session setup based on the ASP may be performed based on the information associated with the above-mentioned WSB discovery operation. In the WSB discovery operation, a terminal searches for a terminal having a counterpart WSB USB role. For example, from the perspective of a WSB host, if a seek service is performed, the WSB host transmits a probe request, and discovers a terminal that is advertised as a WSB device based on a probe response so as to perform connection thereto, and vice versa. Also, the electronic device 101 may exchange service name information set according to a preferred role or an automatically set role in the WSB discovery operation, and may perform WSB connection according to each role, based on the exchanged service name information. As another example, the electronic device 101 may exchange capability information including information indicating whether changing of a role is supported in the WSB discovery operation.

In operation 820, the electronic device 101 may set up a Wi-Fi Direct connection (e.g., Wi-Fi P2P Group) with the external electronic device, based on the WSB discovery operation. A Wi-Fi Direct connection may be newly generated, or an existing Wi-Fi Direct connection may be used.

In operation 830, the electronic device 101 may set up a WSB session with the external electronic device 102 via the setup Wi-Fi Direct connection. For example, the electronic device 101 may use the WSB service block 631 so as to request the ASP block 641 to initiate requesting for a WSB session. The WSB service block 631 may identify the external electronic device 102 to be connected via WSB, may set a P2P connection scheme, and may call a session connection method including parameters for requesting a WSB session according to the set P2P scheme. The WSB service block 631 may select a transport mode for the MA USB protocol in the requested WSB session. For example, the WSB service block 631 may select a transport mode for the MA USB protocol in the requested WSB session, based on supportable transport modes (e.g., IP or MAC) and WSB host's preferences for a transport mode, which are identified from service information obtained from the WSB device.

In operation 840, after the WSB session is set up, the WSB service block 631 of the electronic device 101 and the WSB service block 632 of the external electronic device 102 exchange MA USB packets for the WSB session via the P2P wireless connection, and the MA USB device block 621 may be activated for a USB device enumeration process. The MA USB device block 621 may transfer USB data and perform USB device operations according to a transport mode selected among the supportable transport modes for the WSB session. After the WSB session is set up, the WSB host device may trigger the USB device enumeration process using the MA USB host block 622. The WSB host device may be a device that is determined to be a WSB host based on information exchanged in the WSB discovery operation.

In operation 850, the electronic device 101 may determine to change the MA USB mode of the electronic device 101, based on the state of the electronic device 101 or a request from the external electronic device 102. The MA USB mode may include a MA USB host or a MA USB device. For example, the electronic device 101 may determine whether to change a role to a host role, depending on the type of application 671 which is executed in the electronic device 101 For example, if an application that requires a host function is running or a role switching function is activated in the electronic device 101, the processor 121 may determine that the electronic device 101 needs to change the role to a host role. Alternatively, the processor 101 may determine whether to change a role, based on a request from a user. For example, if the electronic device 101 is required to use a designated function (e.g., file sharing or the like), the electronic device 101 may determine that the electronic device 101 needs to change the role to a host role. For example, while the electronic device 101 operates as a device role, if an application 671 for file sharing is running and file transmission is attempted via the running file sharing application 671, the electronic device 101 may determine that the electronic device 101 needs to change a role from the device role to a host role.

In operation 860, if the electronic device 101 determines to change the MA USB mode of the electronic device 101, the electronic device 101 may identify the current MA USB mode of the electronic device 101, and may terminate a MA USB host-device connection between the electronic device 101 and the external electronic device 102 in order to change the identified MA USB mode to a counterpart MA USB mode. For example, if the electronic device 101 is changed from a MA USB device role to a host role, the electronic device 101 may deactivate the MA USB device block 621 so as to suspend providing a service as a MA USB device. If changing the role of the electronic device 101 to the MA USB host role is determined, the electronic device 101 may transfer information indicating that changing of the role of the electronic device 101 to the MA USB host role is determined, to the external electronic device 102.

In operation 870, the electronic device 101 may activate the MA USB host block 721 configured to perform host functions so that the electronic device 101 functions as a host role, and may communicate with the external electronic device 102. The electronic device 101 may trigger a MA USB enumeration process for the external electronic device 102, using the MA USB host block 622, so that the electronic device 101 operates the MA USB host role and communicates with the external electronic device 102. The electronic device 101 may perform control so that the USB class device 711 operates as a host role, when the role of electronic device 101 is changed to the MA USB host role. The role of the external electronic device 102 may be changed from a MA USB host role to a MA USB device role, at the same time when the role of the electronic device 101 is changed from a MA USB device role to a MA USB host role. The USB class driver 712 of the external electronic device 102 may operate as a device role.

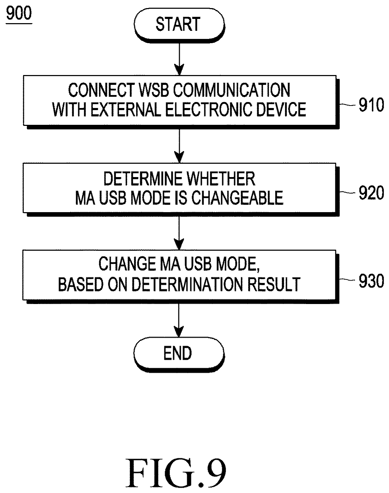

FIG. 9 is a flowchart 900 illustrating a method of performing WSB communication with an external electronic device by an electronic device according to various embodiments.

According to various embodiments, operations 910 to 930 may be performed by an electronic device (e.g., the electronic device 101 or 102) or a processor (e.g., the processor 120, 121, or 122) in FIG. 6 or 7. The electronic device 101 may store, in the memory 130, instructions that enable operations 910 to 930 to be implemented.

In operation 910, the electronic device 101 may connect WSB communication with the external electronic device 102. The WSB communication may be connected by performing a WSB discovery, a connection setup, a WSB session setup, and a MA USB enumeration process.

In operation 920, the electronic device 101 may determine whether a MA USB mode is changeable. The electronic device 101 may identify the USB role of a partner device with which WSB communication is connected. For example, the electronic device 101 may use role information (e.g., service name) obtained in the WSB discovery operation that is executed first among the operations performed for WSB connection. Alternatively, the electronic device 101 may identify the USB role of itself, or may request the partner device to identify the USB role. For example, the electronic device 101 may identify class capability related to the function of a supportable role of the partner device. The electronic device 101 may not perform an operation of changing the role of the corresponding electronic device, if it is determined that the role or class capability of the partner device is incapable of performing a function that the corresponding electronic device requires. In this instance, the electronic device 101 may display, on a display (e.g., the display device 160), a message (e.g., UX) indicating that a role change function is not allowed. For example, if an electronic device that operates as a WSB device attempts file transmission via a file sharing application, the electronic device may determine whether to change a role from the WSB device to a WSB host device, and may identify whether the partner device is capable of performing a WSB device role for file sharing. For example, the electronic device may identify whether the partner device includes a USB larger capacity storage device class. If the partner device does not include the corresponding function class, the electronic device may display, on the display 160, a message indicating that file transmission to a user is not allowed.

In operation 930, if the electronic device 101 determines that the MA USB mode is changeable, the electronic device 101 may identify the current MA USB mode of the electronic device 101, and may terminate the MA USB host-device connection between the electronic device 101 and the external electronic device 102 in order to change the identified MA USB mode to a counterpart MA USB mode. For example, if the electronic device 101 is changed from a MA USB device role to a host role, the electronic device 101 may deactivate the MA USB device block 621 so as to suspend providing a service as a MA USB device. If changing the role of the electronic device 101 to the MA USB host role is determined, the electronic device 101 may transfer information indicating that changing of the role of the electronic device 101 to the MA USB host role is determined, to the external electronic device 102. The electronic device 101 may activate the MA USB host block 721 configured to perform host functions so that the electronic device 101 operates in the changed MA USB mode (e.g., a host role), and may communicate with the external electronic device 102. The electronic device 101 may trigger a MA USB enumeration process for the external electronic device 102, using the MA USB host block 622, so that the electronic device 101 operates the MA USB host role and communicates with the external electronic device 102. The electronic device 101 may perform control so that the USB class device 711 operates as a host role, when the role of electronic device 101 is changed to the MA USB host role. The role of the external electronic device 102 may be changed from a MA USB host role to a MA USB device role, at the same time when the role of the electronic device 101 is changed from a MA USB device role to a MA USB host role. The USB class driver 712 of the external electronic device 102 may operate as a device role.

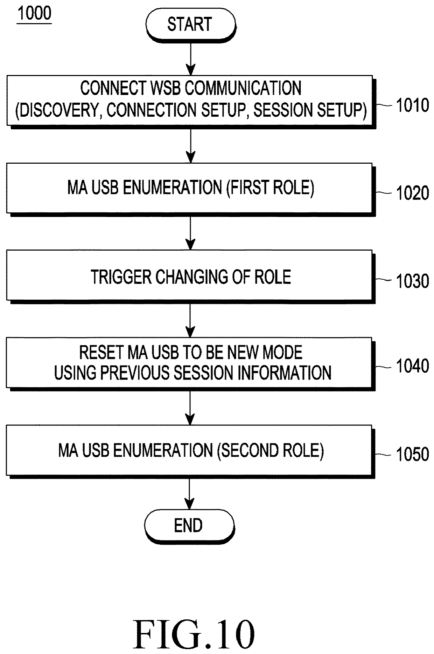

FIG. 10 is a flowchart 1000 illustrating a method of performing WSB communication with an external electronic device by an electronic device according to various embodiments.

According to various embodiments, operations 1010 to 1050 may be performed by an electronic device (e.g., the electronic device 101 or 102) or a processor (e.g., the processor 120, 121, or 122) in FIG. 6 or 7. The electronic device 101 may store, in the memory 130, instructions that enable operations 1010 to 1050 to be implemented.

In operation 1010, the electronic device 101 may connect WSB communication with the external electronic device 102. The WSB communication may be connected by performing a WSB discovery, a connection setup, and a WSB session setup.

In operation 1020, after the WSB session is set up, the WSB service block 631 of the electronic device 101 and the WSB service block 632 of the external electronic device 102 exchange MA USB packets for the WSB session via a P2P wireless connection, and the MA USB device block 621 may be activated for a USB device enumeration process. The MA USB device block 621 may transfer USB data and perform USB device operations according to a transport mode selected among the supportable transport modes for the WSB session. After the WSB session is set up, a WSB host device may trigger a USB device enumeration process using the MA USB host block 622. The WSB host device may be a device that is determined to be a WSB host based on information exchanged in the WSB discovery operation.

In operation 1030, the electronic device 101 may determine to change the MA USB mode of the electronic device 101, based on the state of the electronic device 101 or a request from the external electronic device 102. For example, the state of the electronic device may be a state of receiving a request from a user or a request from an application. If changing of the MA USB mode is determined, the electronic device 101 may trigger changing of the role of the MA USB mode.

In operation 1040, if changing of role of the MA USB mode is triggered, the electronic device 101 may reset the MA USB mode to a new MA USB mode in the state of maintaining the existing WSB session connection, in order to change the role of the MA USB mode. For example, if the electronic device 101 determines to change the role from a device role to a host role, the electronic device 101 may change the MA USB device block 621 to the MA USB host block 721 in the state of maintaining the existing WSB session connection, using the WSB service block 631. For example, the WSB service block 631 may deactivate the MA USB device block 621, and may activate the MA USB host block 721, and thus, an existing USB class protocol stack may be removed. Alternatively, the WSB service block 631 may remove the existing USB class protocol stack by successively transmitting a service teardown event and a connection event to the MA USB device block 621.

In operation 1050, if the existing USB class protocol stack is removed and reset, the MA USB host block 721, which has been activated or which is newly activated in the electronic device 101, may perform an enumeration process and may load a new USB class protocol stack again. The WSB service block 631 may transfer a connection event including information associated with an existing connected WSB session (e.g., an IP address, a MAC address, a session identifier, and the like), to the MA USB host block 721. The connection event may include a service name corresponding to a new USB role and USB class.

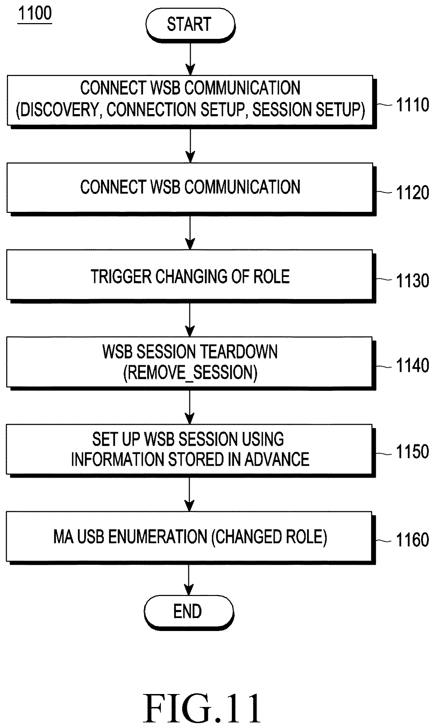

FIG. 11 is a flowchart 1100 illustrating a method of performing WSB communication with an external electronic device by an electronic device according to various embodiments.

According to various embodiments, operations 1110 to 1160 may be performed by an electronic device (e.g., the electronic device 101 or 102) or a processor (e.g., the processor 120, 121, or 122) in FIG. 6 or 7. The electronic device 101 may store, in the memory 130, instructions that enable operations 1110 to 1160 to be implemented.

In operation 1110, the electronic device 101 may connect WSB communication with the external electronic device 102. The WSB communication may be connected by performing a WSB discovery, a connection setup, and a WSB session setup.

In operation 1120, after the WSB session is set up, the WSB service block 631 of the electronic device 101 and the WSB service block 632 of the external electronic device 102 exchange MA USB packets for the WSB session via a P2P wireless connection, and the MA USB device block 621 may be activated for a USB device enumeration process. The MA USB device block 621 may transfer USB data and perform USB device operations according to a transport mode selected among the supportable transport modes for the WSB session. After the WSB session is set up, a WSB host device may trigger a USB device enumeration process using the MA USB host block 622. The WSB host device may be a device that is determined to be a WSB host based on information exchanged in the WSB discovery operation.

In operation 1130, the electronic device 101 may determine to change the MA USB mode of the electronic device 101, based on the state of the electronic device 101 or a request from the external electronic device 102. For example, the state of the electronic device may be a state of receiving a request from a user or a request from an application. If changing of the MA USB mode is determined, the electronic device 101 may trigger changing of the role of the MA USB mode.

In operation 1140, if changing of the role of the MA USB mode is triggered, the electronic device 101 may terminate the WSB session connection (e.g., a WSB session teardown) in order to change the role of the MA USB mode. For example, the electronic device 101 may terminate the WSB session using a CloseSession method or REMOVE_SESSION. The electronic device 101 may not perform Dissociation after ReleasePort, when terminating the WSB session connection. Also, the electronic device 101 may not perform a connection setup (e.g., Wi-Fi Direct connection), when setting up a new WSB session. The electronic device 101 may store information associated with an advertisement ID, a MAC address, an IP address, and the like which are used for the previous WSB session connection.

If the WSB session connection is terminated, the electronic device 101 may perform a WSB session setup using the information stored in advance in operation 1150. For example, the electronic device 101 may omit an operation such as SessionStatus Requested, and may perform a SessionStatus Open method so as to rapidly set up a session with a partner device. The electronic device 101 may set up a WSB session that supports a role different from a previous role, using a Wi-Fi direct group (e.g., a P2P group) of which connection is set up, so as to support changing a role. As another example, when setting up a WSB session, the processor 101 may have an advertisement ID and a session ID which are different from those of the previous session setup. The newly set WSB session may perform a different USB role from that of the previous WSB session, and respective roles and sessions may correspond to different MA USB modes and drives.

In operation 1160, if the WSB session, capable of performing a different USB role from that of the previous WSB session, is completely set up, the electronic device 101 may perform an enumeration process for a new USB connection, and may complete connection of WSB communication having a different role from the previous USB role.

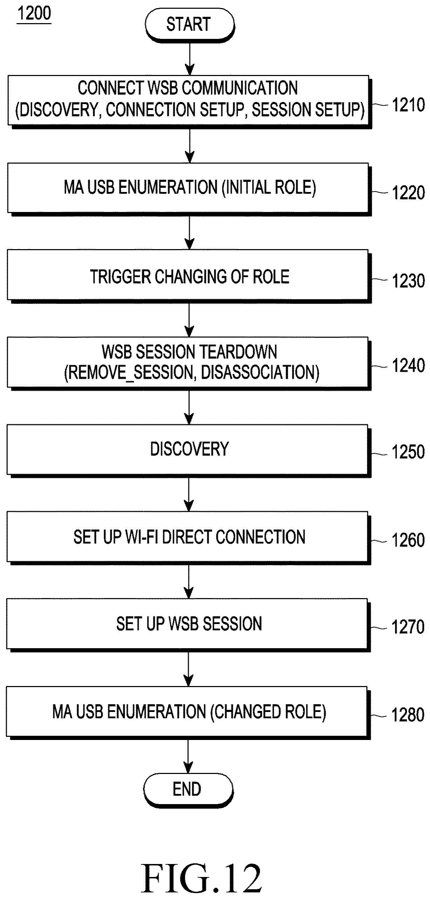

FIG. 12 is a flowchart 1200 illustrating a method of performing WSB communication with an external electronic device by an electronic device according to various embodiments.

According to various embodiments, operations 1210 to 1280 may be performed by an electronic device (e.g., the electronic device 101 or 102) or a processor (e.g., the processor 120, 121, or 122) in FIG. 6 or 7. The electronic device 101 may store, in the memory 130, instructions that enable operations 1210 to 1280 to be implemented.

In operation 1210, the electronic device 101 may connect WSB communication with the external electronic device 102. The WSB communication may be connected by performing a WSB discovery, a connection setup, and a WSB session setup.

In operation 1220, after the WSB session is set up, the WSB service block 631 of the electronic device 101 and the WSB service block 632 of the external electronic device 102 exchange MA USB packets for the WSB session via a P2P wireless connection, and the MA USB device block 621 may be activated for a USB device enumeration process. The MA USB device block 621 may transfer USB data and perform USB device operations according to a transport mode selected among the supportable transport modes for the WSB session. After the WSB session is set up, a WSB host device may trigger a USB device enumeration process using the MA USB host block 622. The WSB host device may be a device that is determined to be a WSB host based on information exchanged in the WSB discovery operation.

In operation 1230, the electronic device 101 may determine to change the MA USB mode of the electronic device 101, based on the state of the electronic device 101 or a request from the external electronic device 102. For example, the state of the electronic device may be a state of receiving a request from a user or a request from an application. If changing of the MA USB mode is determined, the electronic device 101 may trigger changing of the role of the MA USB mode.

In operation 1240, if changing of the role of the MA USB mode is triggered, the electronic device 101 may terminate the WSB session connection (e.g., a WSB session teardown) in order to change the role of the MA USB mode. For example, the electronic device 101 may perform a disassociation method in the state in which the WSB session is terminated using a CloseSession method, so as to terminate the previous Wi-Fi Direct group connection.

In operation 1250, the electronic device 101 may perform a WSB discovery. For example, if at least one electronic device among an group owner (GO) and a plurality of group clients (GCs) included in the Wi-Fi Direct group performs a session teardown for changing a role, the electronic device may discover an existing Wi-Fi Direct group, using Wi-Fi Direct group information stored in advance (e.g., session information, performance information, or the like).

In operation 1260, the electronic device 101 may perform a connection setup so as to generate a new Wi-Fi Direct group, and may connect WSB communication having a different role from the previous USB role. The new Wi-Fi Direct group may be promptly performed using information related to the previous connection.

In operation 1270, the electronic device 101 may perform a WSB session setup when the connection setup is completed.

In operation 1280, the electronic device 101 may perform a MA USB enumeration process so that the connection of the WSB communication having a different role from the previous USB role may be completed.

In operations 1240 to 1280, the electronic device 101 may generate a Wi-Fi Direct group using a band different from that of the currently connected Wi-Fi Direct connection, based on a real simultaneous dual band (RSDB) function, and may connect WSB communication. For example, if WSB session teardown is performed, the electronic device 101 may terminate the WSB session using a closeSession method, and may perform a disassociation method so as to terminate the previous Wi-Fi Direct group connection. The electronic device 101 may perform a WSB discovery, a connection setup, a WSB session setup, and a MA USB enumeration process using a different band, based on the previous Wi-Fi direct group information, before or after performing the disassociation method, and may complete connection of the WSB communication having a different role from the previous USB role.

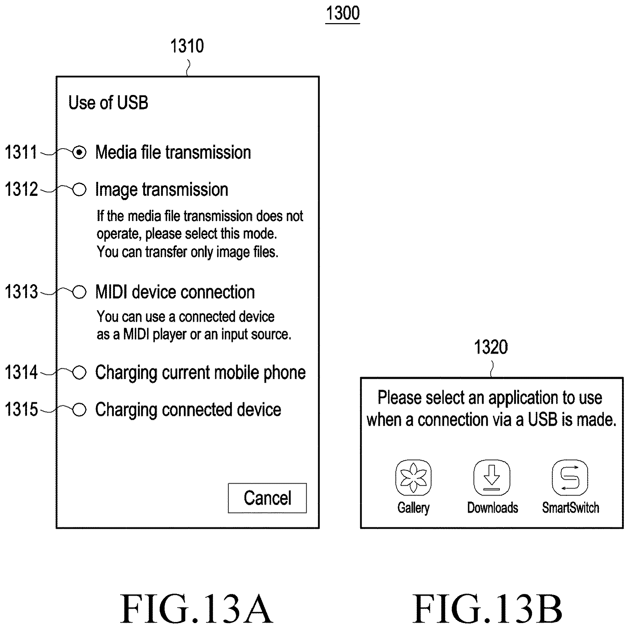

FIG. 13 is a diagram 1300 illustrating an example of a settings screen for changing the MA USB mode of an electronic device according to various embodiments.

Referring to FIG. 13A, the electronic device 101 may display a settings screen 1310 for changing a MA USB mode on a display (e.g., the display device 160). Selection options 1311, 1312, 1313, 1314, and 1315 for selecting a use of a USB may be provided on the settings screen 1310. For example, the portable phone charging option 1314 or the connected device charging option 1315 may be options which are not related to changing of a MA USB mode when WSB connection is connected. According to an embodiment, the media file transmission option 1311 and the image transmission option 1312 may be serviced when a corresponding terminal operates as a host role. When the current terminal operates as a device role, if the media file transmission option 1311 or the image transmission option 1312 is selected, the MA USB mode may be changed from a device role to a host role. According to an embodiment, the MIDI device connection option 1313 is selected for enabling a partner terminal to operate as a host role. When the current terminal is a host role and the partner terminal is a device role, if the MIDI device connection option 1313 is selected, the MA USB mode may be changed from a host role to a device role.

Referring to FIG. 13B, the electronic device 101 may display an application select screen 1320 for selecting an application that may require changing of a MA USB mode on a display (e.g., the display device 160). On the select screen 1320, at least one application that needs to identify a storage area of a partner terminal and to receive a file is displayed. If a user selects a predetermined application on the select screen 1320, and the current terminal operates as a device role, the role may be changed to a host role.

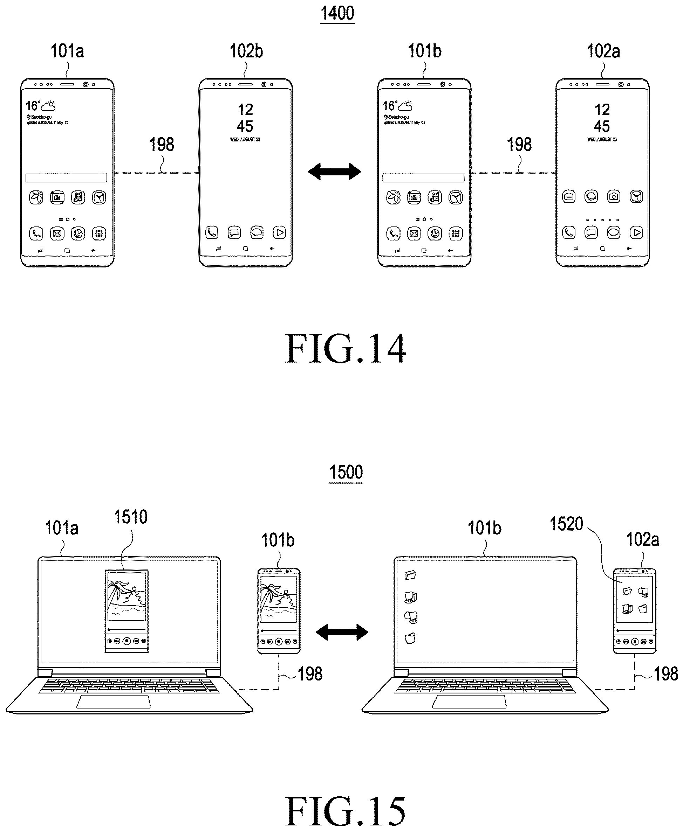

FIG. 14 is a diagram 1400 illustrating an example of changing the MA USB modes of an electronic device and an external electronic device according to various embodiments.

Referring to FIG. 14, an electronic device 101a (e.g., a smart phone) and an external electronic device 102b (e.g., a smart phone) may operate as a host role and a device role, respectively, via a WSB communication connection. For example, in the state in which the electronic device 101a operating in a host role and the external electronic device 102b operating in a device role are connected, the electronic device 101b may change the role so as to operate as a device role and the external electronic device 102a may change the role so as to operate as a host role in response to a request from a user or the state of the electronic device.

FIG. 15 is a diagram 1500 illustrating an example of changing the MA USB modes of an electronic device and an external electronic device according to various embodiments.

Referring to FIG. 15, the electronic device 101a (e.g., a PC) and an external electronic device 101b (e.g., a smart phone) may operate as a host role and a device role, respectively, via a WSB communication connection. For example, the electronic device 101a may operate as a host role, and may provide a function of mirroring and displaying the screen of the connected external electronic device 101b as it is. In this instance, if the external electronic device 102a operates as a host role and the electronic device 101b operates as a device role in response to a request from a user or the state of the electronic device, the external electronic device 102a may operate as a host role and may provide a function of mirroring and displaying the screen of the connected electronic device 101b as it is, contrary to the earlier example.

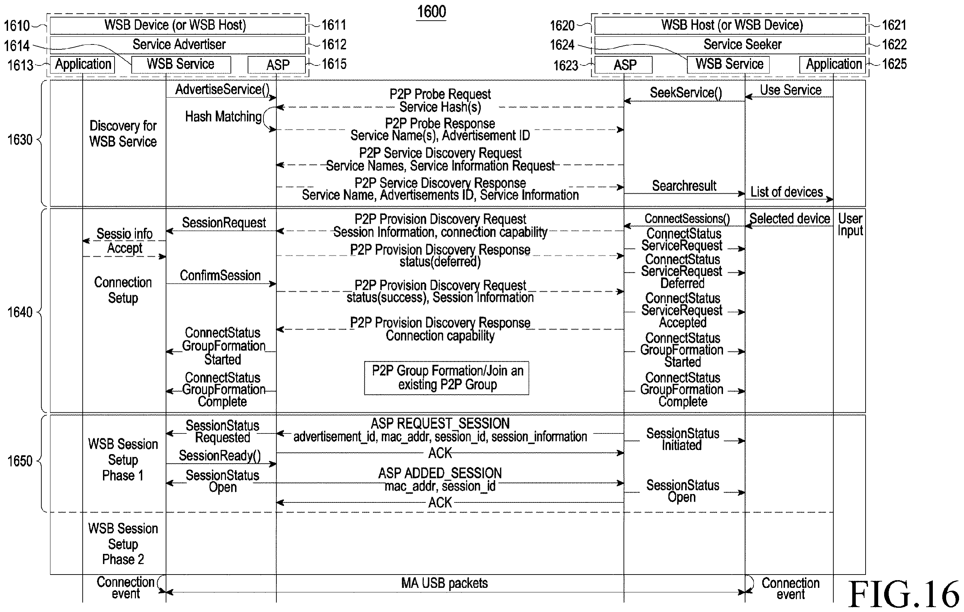

FIG. 16 is a diagram 1600 illustrating an example of a WSB connection setup between an electronic device and an external electronic device according to various embodiments.

Referring to FIG. 16, an electronic device 1610 may operate as a WSB device (or host), and an external electronic device 1620 may operate as a WSB host (or device). As another example, the electronic device 1610 and the external electronic device 1620 may operate as a WSB device and a WSB host at the same time. Each of the electronic device 1610 and the external electronic device 1620 may include an application 1613 and 1625, a WSB service 1614 and 1624, and an ASP 1615 and 1623. The electronic device 1610 may advertise a service via a service advertiser 1612, and the external electronic device 1620 may search for a service via a service seeker 1622.

A WSB service setup operation performed between the electronic device 1610 and the external electronic device 1620 may include a WSB discovery operation 1630, a connection setup operation 1640, and at least one WSB session setup operation 1650.

In the WSB discovery operation 1630, the external electronic device 1620 may activate a service seeker (e.g., the service seeker 1622 of FIG. 16) so as to search for a service, and the ASP 1623 of the external electronic device 1620 may transmit a P2P probe request to the electronic device 1610. The ASP 1615 of the electronic device 1610 may perform hash matching in response to the P2P probe request, and may transmit a P2P probe response to the external electronic device 1620 (e.g., the ASP 1623 of the external electronic device 1620). The ASP 1623 of the external electronic device 1620 may transmit a P2P service discovery request including a service name and a service information request to the electronic device 1610 (e.g., the ASP 1615 of the electronic device 1610). The electronic device 1610 (e.g., the ASP 1615 of the electronic device 1610) may transmit a P2P service discovery response including a service name, an advertisement ID, service information to the external electronic device 1620 (e.g., the ASP 1623 of the external electronic device 1620), in response to the P2P service discovery request.

In the connection setup operation 1640, the external electronic device 1620 (e.g., the ASP 1623 of the external electronic device 1620) may transmit a P2P provision discovery request including session information and connection capability to the electronic device 1610 (e.g., the ASP 1615 of the electronic device 1610). The ASP 1615 of the electronic device 1610 may transfer a session request to the WSB service component 1614 of the electronic device 1610, and the WSB service 1614 of the electronic device 1610 may transfer a session confirmation to the ASP 1615 of the electronic device 1610, based on a session acceptance by the application 1613 of the electronic device 1610. The electronic device 1610 (e.g., the ASP 1615 of the electronic device 1610) may transmit a P2P provision discovery response to the external electronic device 1620 (e.g., the ASP 1623 of the external electronic device 1620), in response to the received P2P provision discovery request. The electronic device 1610 (e.g., the ASP 1615 of the electronic device 1610) may transmit a P2P provision discovery request including session information to the external electronic device 1620 (e.g., the ASP 1623 of the external electronic device 1620), and the external electronic device 1620 may transmit a P2P provision discovery response including connection capability to the electronic device 1610 (e.g., the ASP 1615 of the electronic device 1610) as session information in response to the received P2P provision discovery request.

In the WSB session setup operation 1650, the external electronic device 1620 (e.g., the ASP 1623 of the external electronic device 1620) may transmit an ASP request session (ASP request-session), including an advertisement ID (advertisement_ID), a MAC address (MAC_address), a session ID (session_id), and session information (session information), to the electronic device 1610 (e.g., the ASP 1615 of the electronic device 1610). The ASP 1623 of the external electronic device 1620 may transfer an initiated session state to the WSB service 1624.

The electronic device 1610 (e.g., the ASP 1615 of the electronic device 1610) may transmit an ACK to the external electronic device 1620 (e.g., the ASP 1623 of the external electronic device 1620) in response to the received ASP request session. For example, the electronic device 1610 (e.g., the ASP 1615 of the electronic device 1610) may transmit an ASP added session (ASP added-session), including a MAC address (MAC_address) and a session ID (session_id), to the external electronic device 1620 (e.g., the ASP 1623 of the external electronic device 1620), and the electronic device 1610 may transmit an ACK to the electronic device 1610 in response to the received ASP added session. After the WSB session setup is performed between the electronic device 1610 and the external electronic device 1620, the electronic device 1610 and the external electronic device 1620 may perform transmission/reception of a MA USB packet.

## Claims

1. An electronic device (101) comprising,
a communication circuit (192) configured to provide wireless communication;
a processor (120, 121) electrically connected to the communication circuit; and
a memory (130) electrically connected to the processor,
wherein the memory stores instructions configured to cause the processor to, when executed,
establish communication with an external electronic device (102, 104) using the communication circuit by operating as a media agnostic universal serial bus, MA USB, device to perform device functions defined in MA USB specifications;
determine to change the electronic device to be a MA USB host, based on a type of an application which is executed in the electronic device; and
communicate with the external electronic device by operating as the MA USB host to suspend providing a service as the MA USB device and to perform host functions defined in the MA USB specifications.

2. The electronic device (101) of claim 1, wherein the instructions are configured to cause the processor (120, 121) to,
perform the host functions using a USB class host driver and an MA USB host block that interfaces with the USB class host driver,
wherein the MA USB host block comprises a USB host logic, a MA USB host protocol adaptation layer, PAL, and a MA link interface.

3. The electronic device (101) of claim 2, wherein the instructions are configured to cause the processor (120, 121) to,
perform the device functions using a USB class device driver and an MA USB device block that interfaces with the USB class device driver,
wherein the MA USB device block comprises a USB device logic, a MA USB device protocol adaptation layer, PAL, and a MA link interface.

4. The electronic device (101) of claim 3, wherein the instructions are configured to cause the processor (120, 121) to,
trigger an MA USB enumeration process for the electronic device to communicate with the external electronic device by operating as the MA USB device.

5. The electronic device (101) of claim 1, wherein the instructions are configured to cause the processor (120, 121) to,
determine whether the external electronic device (102, 104) is changeable to be the MA USB device, and to determine whether to change the electronic device to be the MA USB host based on the determination.

6. The electronic device (101) of claim 1, wherein the instructions are configured to cause the processor (120, 121) to,
transfer, to the external electronic device (102, 104), information indicating that changing of the electronic device to be the MA USB host is determined, in response to changing of the electronic device to be the MA USB host being determined.

7. The electronic device (101) of claim 1, wherein the instructions are configured to cause the processor (120, 121) to,
perform operations based on a Wi-Fi serial bus, WSB, service, which is configured to connect WSB communication after changing of the electronic device to be the MA USB host is determined, the operations comprising,
a WSB discovery operation for connecting the WSB communication via the communication circuit;
an operation of setting up a Wi-Fi Direct connection with the external electronic device, based on the WSB discovery operation; and
an operation of setting up a WSB session with the external electronic device via the Wi-Fi Direct connection with the external electronic device.

8. The electronic device (101) of claim 7, wherein the instructions are configured to cause the processor (120, 121) to,
exchange information including at least one of a service name, an advertisement ID, service information for the WSB communication connection, or capability information of a dual-role function of the electronic device or the external electronic device (102, 104), via the WSB discovery operation.

9. The electronic device (101) of claim 8, wherein the instructions are configured to cause the processor (120, 121) to,
exchange information including at least one of a peer to peer (P2P) address, an IP address, a MAC address, or a session identifier, via the operation of setting up the WSB session with the external electronic device (102, 104).

10. The electronic device (101) of claim 9, wherein the instructions are configured to cause the processor (120, 121) to,
deactivate the MA USB device and to activate the MA USB host using the WSB service, in response to changing of the electronic device to be the MA USB host being determined.

11. The electronic device (101) of claim 10, wherein the instructions are configured to cause the processor (120, 121) to,
perform at least one of the WSB discovery operation, the operation of setting up the Wi-Fi Direct connection, or the operation of setting up the WSB session, before the electronic device establishes communication with the external electronic device (102, 104) by operating as the MA USB device.

12. The electronic device (101) of claim 11, wherein the instructions are configured to cause the processor to,
maintain the Wi-Fi Direct connection with the external electronic device (102, 104), terminate the WSB session, and set up a new WSB session associated with the MA USB host, in response to changing of the electronic device to be the MA USB host being determined.

13. The electronic device (101) of claim 11, wherein the instructions are configured to cause the processor (120, 121) to,
terminate the Wi-Fi Direct connection with the external electronic device (102, 104), and set up a new Wi-Fi Direct connection and a new WSB session associated with the MA USB host, in response to changing of the electronic device to be the MA USB host being determined.

14. The electronic device (101) of claim 13, wherein the instructions are configured to cause the processor (120, 121) to,
set up the new Wi-Fi Direct connection associated with the MA USB host, using a band different from that of the terminated Wi-Fi Direct connection.

## Patentansprüche

1. Elektronische Vorrichtung (101), umfassend,
eine Kommunikationsschaltung (192), die dafür konfiguriert ist, drahtlose Kommunikation bereitzustellen;
einen Prozessor (120, 121), der elektrisch mit der Kommunikationsschaltung verbunden ist; und
einen Speicher (130), der elektrisch mit dem Prozessor verbunden ist,
wobei der Speicher Anweisungen speichert, die dafür konfiguriert sind, bei Ausführung, den Prozessor zu veranlassen zum
Herstellen einer Kommunikation mit einer externen elektronischen Vorrichtung (102, 104) unter Verwendung der Kommunikationsschaltung, indem sie als medienunabhängige universelle serielle Bus-, MA USB-, Vorrichtung zum Durchführen von in MA USB-Spezifikationen definierten Vorrichtungsfunktionen arbeitet;
Festlegen des Abänderns der elektronischen Vorrichtung in einen MA-USB-Host, basierend auf einem Typ einer Anwendung, die in der elektronischen Vorrichtung ausgeführt wird; und
Kommunizieren mit der externen elektronischen Vorrichtung, indem sie als MA USB-Host arbeitet, um das Bereitstellen eines Dienstes als MA USB-Vorrichtung auszusetzen und in den MA USB-Spezifikationen definierte Hostfunktionen durchzuführen.

2. Elektronische Vorrichtung (101) nach Anspruch 1, wobei die Anweisungen dafür konfiguriert sind, den Prozessor (120, 121) zu veranlassen zum
Durchführen der Hostfunktionen unter Verwendung eines Host-Treibers der USB-Klasse und eines MA USB-Host-Blocks mit Schnittstelle zu dem Host-Treiber der USB-Klasse,
wobei der MA USB-Host-Block eine USB-Host-Logik, eine MA USB-Host-Protokollanpassungsschicht, PAL, und eine MA-Link-Schnittstelle umfasst.

3. Elektronische Vorrichtung (101) nach Anspruch 2, wobei die Anweisungen dafür konfiguriert sind, den Prozessor (120, 121) zu veranlassen zum
Durchführen der Vorrichtungsfunktionen unter Verwendung eines Vorrichtungstreibers der USB-Klasse und eines MA USB-Vorrichtungsblocks mit Schnittstelle zu dem Vorrichtungstreiber der USB-Klasse,
wobei der MA USB-Vorrichtungsblock eine USB-Vorrichtungslogik, eine MA USB-Vorrichtungs-Protokollanpassungsschicht, PAL, und eine MA-Link-Schnittstelle umfasst.

4. Elektronische Vorrichtung (101) nach Anspruch 3, wobei die Anweisungen dafür konfiguriert sind, den Prozessor (120, 121) zu veranlassen zum
Auslösen eines MA USB-Enumerationsprozesses, damit die elektronische Vorrichtung mit der externen elektronischen Vorrichtung kommuniziert, indem sie als die MA USB-Vorrichtung arbeitet.

5. Elektronische Vorrichtung (101) nach Anspruch 1, wobei die Anweisungen dafür konfiguriert sind, den Prozessor (120, 121) zu veranlassen zum
Festlegen, ob die externe elektronische Vorrichtung (102, 104) in die MA USB-Vorrichtung abänderbar ist, und zum Festlegen, ob die elektronische Vorrichtung basierend auf der Festlegung in den MA USB-Host abzuändern ist.

6. Elektronische Vorrichtung (101) nach Anspruch 1, wobei die Anweisungen dafür konfiguriert sind, den Prozessor (120, 121) zu veranlassen zum
Übertragen, an die externe elektronische Vorrichtung (102, 104), von Informationen, die angeben, dass das Abändern der elektronischen Vorrichtung in den MA USB-Host festgelegt wird, als Reaktion auf das Festlegen des Abänderns der elektronischen Vorrichtung in den MA USB-Host.

7. Elektronische Vorrichtung (101) nach Anspruch 1, wobei die Anweisungen dafür konfiguriert sind, den Prozessor (120, 121) zu veranlassen zum
Durchführen von Vorgängen basierend auf einem Wi-Fi seriellen Bus-, WSB-, Dienst, der konfiguriert ist zum Verbinden der WSB-Kommunikation nach dem Festlegen des Abänderns der elektronischen Vorrichtung in den MA USB-Host, wobei die Vorgänge umfassen:
einen WSB-Erkennungsvorgang zum Verbinden der WSB-Kommunikation über die Kommunikationsschaltung;
einen Vorgang zum Aufbauen einer Wi-Fi Direct-Verbindung mit der externen elektronischen Vorrichtung, basierend auf dem WSB-Erkennungsvorgang; und
einen Vorgang zum Aufbauen einer WSB-Sitzung mit der externen elektronischen Vorrichtung über die Wi-Fi Direct-Verbindung mit der externen elektronischen Vorrichtung.

8. Elektronische Vorrichtung (101) nach Anspruch 7, wobei die Anweisungen dafür konfiguriert sind, den Prozessor (120, 121) zu veranlassen zum
Austauschen von Informationen einschließlich mindestens eines von einem Dienstnamen, einer Werbe-ID, Dienstinformationen für die WSB-Kommunikationsverbindung oder Fähigkeitsinformationen einer Doppelrollenfunktion der elektronischen Vorrichtung oder der externen elektronischen Vorrichtung (102, 104), über den WSB-Erkennungsvorgang.

9. Elektronische Vorrichtung (101) nach Anspruch 8, wobei die Anweisungen dafür konfiguriert sind, den Prozessor (120, 121) zu veranlassen zum
Austauschen von Informationen einschließlich mindestens einer von einer Peer-to-Peer (P2P)-Adresse, einer IP-Adresse, einer MAC-Adresse oder einer Sitzungskennung, über den Vorgang des Aufbauens der WSB-Sitzung mit der externen elektronischen Vorrichtung (102, 104).

10. Elektronische Vorrichtung (101) nach Anspruch 9, wobei die Anweisungen dafür konfiguriert sind, den Prozessor (120, 121) zu veranlassen zum
Deaktivieren der MA USB-Vorrichtung und zum Aktivieren des MA USB-Hosts unter Verwendung des WSB-Dienstes, als Reaktion auf das Festlegen des Abänderns der elektronischen Vorrichtung in den MA USB-Host.

11. Elektronische Vorrichtung (101) nach Anspruch 10, wobei die Anweisungen dafür konfiguriert sind, den Prozessor (120, 121) zu veranlassen zum
Durchführen mindestens eines von dem WSB-Erkennungsvorgang, dem Vorgang des Aufbauens der Wi-Fi Direct-Verbindung oder dem Vorgang des Aufbauens der WSB-Sitzung, bevor die elektronische Vorrichtung eine Kommunikation mit der externen elektronischen Vorrichtung (102, 104) herstellt, indem sie als die MA USB-Vorrichtung arbeitet.

12. Elektronische Vorrichtung (101) nach Anspruch 11, wobei die Anweisungen dafür konfiguriert sind, den Prozessor zu veranlassen zum
Aufrechterhalten der Wi-Fi Direct-Verbindung mit der externen elektronischen Vorrichtung (102, 104),
Beenden der WSB-Sitzung und Aufbauen einer neuen WSB-Sitzung, die mit dem MA USB-Host assoziiert ist, als Reaktion auf das Festlegen des Abänderns der elektronischen Vorrichtung in den MA USB-Host.

13. Elektronische Vorrichtung (101) nach Anspruch 11, wobei die Anweisungen dafür konfiguriert sind, den Prozessor (120, 121) zu veranlassen zum
Beenden der Wi-Fi Direct-Verbindung mit der externen elektronischen Vorrichtung (102, 104) und Aufbauen einer neuen Wi-Fi Direct-Verbindung und einer neuen WSB-Sitzung, die mit dem MA USB-Host assoziiert ist, als Reaktion auf das Festlegen des Abänderns der elektronischen Vorrichtung in den MA USB-Host.

14. Elektronische Vorrichtung (101) nach Anspruch 13, wobei die Anweisungen dafür konfiguriert sind, den Prozessor (120, 121) zu veranlassen zum
Aufbauen der neuen Wi-Fi Direct-Verbindung, die mit dem MA USB-Host assoziiert ist, unter Verwendung eines Bandes, das sich von demjenigen der beendeten Wi-Fi Direct-Verbindung unterscheidet.

## Revendications

1. Dispositif électronique (101) comprenant,
un circuit de communication (192) configuré pour fournir une communication sans fil ;
un processeur (120, 121) connecté électriquement au circuit de communication ; et
une mémoire (130) connectée électriquement au processeur, ladite mémoire stockant des instructions configurées pour amener le processeur, lorsqu'elles sont exécutées, à établir une communication avec un dispositif électronique externe (102, 104) à l'aide du circuit de communication en fonctionnant en tant que dispositif de bus série universel indépendant du support MA USB, pour réaliser les fonctions de dispositif définies dans des spécifications MA USB ;
à déterminer de changer le dispositif électronique pour qu'il soit un hôte MA USB, sur la base d'un type d'une application qui est exécutée dans le dispositif électronique ; et
à communiquer avec le dispositif électronique externe en fonctionnant en tant qu'hôte MA USB pour suspendre la fourniture d'un service en tant que dispositif MA USB et pour réaliser les fonctions d'hôte définies dans les spécifications MA USB.

2. Dispositif électronique (101) selon la revendication 1, lesdites instructions étant configurées pour amener le processeur (120, 121) à réaliser les fonctions hôtes à l'aide d'un pilote hôte de classe USB et d'un bloc hôte MA USB qui s'interface avec le pilote hôte de classe USB, ledit bloc hôte MA USB comprenant une logique hôte USB, une couche d'adaptation de protocole, PAL, hôte MA USB et une interface de liaison MA.

3. Dispositif électronique (101) selon la revendication 2, lesdites instructions étant configurées pour amener le processeur (120, 121) à exécuter les fonctions de dispositif à l'aide d'un pilote de dispositif de classe USB et d'un bloc de dispositif MA USB qui s'interface avec le pilote de dispositif de classe USB, ledit bloc de dispositif MA USB comprenant une logique de dispositif USB, une couche d'adaptation de protocole, PAL, de dispositif MA USB et une interface de liaison MA.

4. Dispositif électronique (101) selon la revendication 3, lesdites instructions étant configurées pour amener le processeur (120, 121) à déclencher un processus d'énumération MA USB pour que le dispositif électronique communique avec le dispositif électronique externe en fonctionnant en tant que dispositif MA USB.

5. Dispositif électronique (101) selon la revendication 1, lesdites instructions étant configurées pour amener le processeur (120, 121) à déterminer si le dispositif électronique externe (102, 104) peut être changé pour être le dispositif MA USB, et à déterminer si le dispositif électronique doit être changé pour qu'il soit l'hôte MA USB sur la base de la détermination.

6. Dispositif électronique (101) selon la revendication 1, lesdites instructions étant configurées pour amener le processeur (120, 121) à transférer, au dispositif électronique externe (102, 104), des informations indiquant que le changement du dispositif électronique pour qu'il soit l'hôte MA USB est déterminé, en réponse à la détermination du changement du dispositif électronique pour qu'il soit l'hôte MA USB.

7. Dispositif électronique (101) selon la revendication 1, lesdites instructions étant configurées pour amener le processeur (120, 121) à réaliser des opérations sur la base d'un service de bus série Wi-Fi, WSB, qui est configuré pour connecter une communication WSB après la détermination du changement du dispositif électronique pour qu'il soit l'hôte MA USB, les opérations comprenant, une opération de découverte WSB pour connecter la communication WSB par l'intermédiaire du circuit de communication ;
une opération d'établissement d'une connexion Wi-Fi Direct avec le dispositif électronique externe, sur la base de l'opération de découverte WSB ; et
une opération d'établissement d'une session WSB avec le dispositif électronique externe par l'intermédiaire de la connexion Wi-Fi Direct avec le dispositif électronique externe.

8. Dispositif électronique (101) selon la revendication 7, lesdites instructions étant configurées pour amener le processeur (120, 121) à échanger des informations comprenant au moins l'un d'un nom de service, d'une ID d'annonce, des informations de service pour la connexion de communication WSB, ou des informations de capacité d'une fonction à double rôle du dispositif électronique ou du dispositif électronique externe (102, 104), par l'intermédiaire de l'opération de découverte WSB.

9. Dispositif électronique (101) selon la revendication 8, lesdites instructions étant configurées pour amener le processeur (120, 121) à échanger des informations comprenant au moins une adresse entre homologues (P2P), une adresse IP, une adresse MAC, ou un identifiant de session, par l'intermédiaire de l'opération d'établissement de la session WSB avec le dispositif électronique externe (102, 104).

10. Dispositif électronique (101) selon la revendication 9, lesdites instructions étant configurées pour amener le processeur (120, 121) à désactiver le dispositif MA USB et à activer l'hôte MA USB à l'aide du service WSB, en réponse à la détermination du changement du dispositif électronique pour qu'il soit l'hôte MA USB.

11. Dispositif électronique (101) selon la revendication 10, lesdites instructions étant configurées pour amener le processeur (120, 121) à effectuer au moins l'une de l'opération de découverte WSB, de l'opération d'établissement de la connexion Wi-Fi Direct, ou de l'opération d'établissement de la session WSB, avant que le dispositif électronique n'établisse une communication avec le dispositif électronique externe (102, 104) en fonctionnant en tant que dispositif MA USB.

12. Dispositif électronique (101) selon la revendication 11, lesdites instructions étant configurées pour amener le processeur à maintenir la connexion Wi-Fi Direct avec le dispositif électronique externe (102, 104), à terminer la session WSB et à établir une nouvelle session WSB associée à l'hôte MA USB, en réponse à la détermination du changement du dispositif électronique pour qu'il soit l'hôte MA USB.

13. Dispositif électronique (101) selon la revendication 11, lesdites instructions étant configurées pour amener le processeur (120, 121) à terminer la connexion Wi-Fi Direct avec le dispositif électronique externe (102, 104) et à établir une nouvelle connexion Wi-Fi Direct et une nouvelle session WSB associée à l'hôte MA USB, en réponse à la détermination du changement du dispositif électronique pour qu'il soit l'hôte MA USB.

14. Dispositif électronique (101) selon la revendication 13, lesdites instructions étant configurées pour amener le processeur (120, 121) à établir la nouvelle connexion Wi-Fi Direct associée à l'hôte MA USB, à l'aide d'une bande différente de celle de la connexion Wi-Fi Direct terminée.
